# EUROPEAN PATENT SPECIFICATION

(11) **EP 3 592 183 B1**
(45) Date of publication and mention of the grant of the patent: **04.05.2022**
(21) Application number: 18708422.3
(22) Date of filing: 06.03.2018
(51) Int. Cl.: A47J 31/00

(54) **METHOD FOR THE PREPARATION OF A BEVERAGE FROM A CAPSULE WITH PREWETTING**
VERFAHREN ZUR HERSTELLUNG EINES GETRÄNKS AUS EINER KAPSEL MIT VORBENETZUNG
PROCÉDÉ DE PRÉPARATION D'UNE BOISSON À PARTIR D'UNE CAPSULE AVEC PRÉ-MOUILLAGE

(30) Priority: 08.03.2017 EP 17159778
(43) Date of publication of application: 15.01.2020
(73) Proprietor: Société des Produits Nestlé S.A., 1800 Vevey (CH)
(72) Inventor: GUYON, Bertrand, 25160 Saint Point Lac (FR); CHIODA, Sergio, 1004 Lausanne (CH)
(74) Representative: Navarro Fernández, Maria Isabel
(86) International application number: PCT/EP2018/055397
(87) International publication number: WO 2018/162440

(56) References cited:
- EP-A1- 2 946 702
- WO-A1-2014/090965
- US-A1- 2013 129 885

## Description

### Field of the Invention:

The invention relates to a method for preparing a beverage in a beverage preparation machine, such as a coffee machine, from a capsule containing ingredients by feeding water to the capsule through a first wall of the capsule by a pump of the machine and by extracting the beverage through a second wall of the capsule. The method more particularly focuses on the preparation of a hot beverage, in particular coffee, from ground coffee containing capsules to improve the in-cup quality of the beverage by an improved control and particular sequencing of certain preparation parameters, in particular, the flow and pressure of water feeding the capsule.

### Background:

Beverage preparation machines utilizing capsules with beverage ingredients are widely known and used. The most popular ones are those which make use of disposable capsules, also called pods or cartridges that contain ground coffee, mixtures of ground coffee and milk, soluble coffee, leaf tea or combinations thereof. Closed capsules such as disclosed in EP0512468 that open reaching a sufficient pressure are well known in the art. Methods using such capsules are also known such as in EP0512470.

It is also known that a prewetting of the coffee in professional-type coffee machines by injecting a small amount of water and reposing for a few seconds may improve or vary the extraction results such as by exalting the aromas.

EP0870457 relates to a flexible water impermeable pod (sachet) positioned in a chamber provided with fixed pointed means suitable to perforate the pod material once this is pressurized and biased against the chamber walls and the perforating means. According to this document, water is fed to the pod and the flow of water is interrupted before reaching a pressure sufficient to cause the perforation of the pod walls.

EP2001343B1 relates to a process of preparing a beverage comprising the steps of feeding water to a closed beverage preparation chamber, such as a closed rigid cartridge, to prepare a beverage, opening the chamber and dispensing the thus prepared beverage from an outlet of the chamber, wherein it comprises the following steps:
- feeding water to the preparation chamber until a first pressure (Pi) of at least 3 bar is reached,
- interrupting at least once the flow of water to the preparation chamber (t ₚᵤₘₚ),
- maintaining the preparation chamber in a closed condition at the first pressure (P₁) for a pressure holding time (tₚᵤₘₚ-t₁) being within the range of 1 to 60 seconds,
- opening the outlet of the preparation chamber and,
- dispensing the thus prepared beverage.

In other words, the method according to this patent comprises a prewetting phase of the ingredients in a rigid cartridge during which the flow of water is interrupted and the pressure is held constant for a few seconds before the flow is resumed for the beverage extraction.

WO2015104165 relates to another method in which a first volume of water is fed in the capsule and, after an interruption, a second volume of water is fed in the capsule and wherein the time point of interrupting the flow of water into the capsule is determined by evaluating a measurement signal output by a flow meter. According to this method, it is possible to determine more precisely and more clearly the time point at which the capsule is correctly filled with water for prewetting. WO 2014/090965 discloses a method for preparing a beverage by centrifugation of a capsule in a centrifuging brewing device of a beverage preparation system.

A problem of the prior art methods is that prewetting has a number of disadvantages. It may result in blocking problems of the flow when not properly controlled such as if the flow is resumed when the delivery wall of the capsule has been opened. The control of the pump is considerably more complex as illustrated by WO2015104165. The preparation time of the beverage is also increased drastically compared to a conventional preparation without prewetting. Indeed, the pump has to start from an off mode to a full operation mode and the ramp up of pressure will take more time. The electrical power used is also quite considerable.

The present invention aims at proposing a solution to these disadvantages.

### Summary of the Invention:

The invention relates to a method for the preparation of a beverage in a beverage preparation machine from a capsule containing beverage ingredients by feeding water to the capsule through a first wall of the capsule by a pump of the machine; the brewed beverage being extracted through a second wall of the capsule; said second wall being preferably opened for extraction of the brewed beverage at least by the effect of the pressure being built up inside the capsule as a result of the water continuing to be fed in the capsule; comprising:
- feeding a first volume of water in the capsule containing beverage ingredients in dry state for prewetting the beverage ingredients in the capsule before beverage is extracted from the second wall of the capsule ("prewetting");
- feeding a second volume of water in the capsule to have beverage extracted from the second wall of the capsule;
   wherein the feeding of the first volume is controlled at, at least one flow rate value that provides a continuous increase of the water pressure from the pump in a first ramp-up phase of water pressure and,
   wherein the feeding of the second water volume is controlled to start immediately and without flow interruption after the feeding of the first water volume and is controlled to increase the water pressure until at least one pressure of extraction after a second ramp-up phase of pressure which is controlled to be steeper than the first ramp-up phase of pressure.

Therefore, the invention produces an efficient prewetting of the beverage ingredients in the capsule by having a continuous feeding of water in the capsule without interruption and by having a low or reduced flow rate during prewetting. The invention thereby eliminates the problems linked to significant holding time with the capsule standing full of water, as well as the problem linked to the resuming of the flow by the pump after interruption and the potential blocking issues originated from such change of state of the pump.

In one aspect, the flow rate of the pump is regulated for the feeding of the first volume of water, particularly to match at least one flow rate set point, until a predetermined flow time or predetermined water volume is reached or a predetermined pressure set point lower than the extraction pressure is reached. Therefore, the flow rate is measured and compared to a set point and the end of the first volume is determined by any one or any combination of: a time constant value, a volume constant value or eventually a pressure constant value. In the last case, a pressure value is measured, e.g., directly by a pressure sensor or indirectly by measuring with a sensor the current consumed by the pump and computing the pressure, and compared to a pressure set point for ending the feeding of the first volume of water at lower or reduced flow rate. The easiest method is however to allocate a predefined time for the first volume of water fed to the capsule at a regulated flow rate.

In a preferred aspect, the feeding of the first volume of water is controlled at a value comprised between 20 and 120 ml/min, more preferably 50-100 ml/min, during a period comprised between 3 and 25 seconds, more preferably 5-20 seconds. Above the given maximum limit of flow rate, the prewetting time must be shortened and prewetting does not become very efficient, whereas below the minimum limit, the prewetting time is too long, the pressure is too slow to increase and/or the preparation time becomes too time-consuming.

In an aspect, the pressure of the water pump is regulated for the feeding of the second volume of water, particularly to match at least one pressure set point. The second volume of water may be fed until the targeted volume of beverage is extracted. In an alternative, additional volume(s) of water is (are) fed until the targeted volume of beverage is extracted. Such additional volume(s) of water can be regulated by flow or pressure. In particular, the flow rate and/or pressure of additional volume(s) can be lower or higher than the flow rate and/or pressure of the second volume of water fed. The variation of flow rate and/or pressure from one volume to the other can be continuous or stepwise depending on the regulation.

Therefore, contrary to the first volume of water, the second volume is preferably not regulated by flow rate but only by pressure because it becomes possible to provide different pressures of extraction depending on the types of capsules (e.g., containing ground coffee blends of different origins). Furthermore, it is more relevant to control the pressure of extraction to avoid a too high or too low pressure of extraction for a given capsule. Of course, a different regulation could also be envisaged such as a flow rate or a mixed regulation (flow rate and pressure).

The flow rate of the second volume of water fed through the first wall of the capsule is higher than the flow rate of the first volume of water fed for prewetting. When the pressure is regulated for the second volume of water, the pump is regulated at a pressure set point higher than 6 bar, preferably between 8 and 25 bar, more preferably at a pressure set point of 10 to 20 bar.

Preferably, the second volume of water is started to be fed before the opening pressure for opening the second wall of the capsule is reached. Generally, the opening of the second wall is obtained by breaking, cutting or tearing the wall against a capsule support of the machine comprising one or a plurality of protrusions. In order to overcome the pressure drop necessary for opening the wall, it is necessary to set a sufficiently high pressure set point so that the pressure ramp-up phase is steep enough and opening is obtained successfully.

The pump is preferably chosen to be of a type which is controllable in pressure and flow rate such as a gear pump, a membrane pump or a syringe pump. The pump is dimensioned to be able to deliver flow rate over a wide range of flow rates such as 50 to 500 ml/min.

In one aspect, the flow rate is determined with flow rate determination means arranged according to any one or a combination of the following manners:
a) by determining the reduction of volume by time unit of a pressurized water chamber of a syringe pump of the machine or,
b) by measuring by a flow meter the flow rate of water fed by the pump to the capsule or,
c) by measuring the rotational speed of the motor of a rotary volumetric pump and computing the flow rate accordingly.

In particular, in manner a), the reduction of volume of the pressurized water chamber may be determined by the relative displacement of a displaceable wall delimiting the chamber, displaced by an electrical actuator, as a function of time.

Furthermore, the capsule type may be identified by the beverage preparation machine. Certain parameters of the preparation are determined by the control unit as a function of the type of the capsule identified. In particular the feeding of the first volume of water and/or the second volume of water may be controlled by the control unit as function of the type of capsule identified. For example, depending on the capsule type, e.g., coffee blend, the feeding of the first volume of water can be regulated at a different flow rate or flow rates and/or the second water volume at a different pressure or pressures. The feeding of additional volume(s) of water may further be controlled.

Generally, the feeding of the first volume of water may alternatively be set by the control unit without regulating the flow rate regulation but simply by powering the pump at a predetermined current level for a predetermined time to provide a slow flow rate and the steady increase of the pressure as desired for prewetting. In this case, these characteristics for the feeding of the first water volume, i.e., powering of the pump and timing, can be predetermined as function of the type of capsule for example.

The invention further relates to a beverage preparation machine for the implementation of the method as aforementioned, comprising:
a source of water,
a dispensing outlet,
a brewing unit for receiving the capsule,
a water pump for feeding water to the brewing unit,
wherein it comprises a control unit arranged for controlling the pump for:
   - feeding a first volume of water in the capsule containing beverage ingredients in dry state for prewetting the beverage ingredients in the capsule before beverage is extracted from the second wall of the capsule ("prewetting");
   - feeding a second volume of water in the capsule to have beverage extracted from the second wall of the capsule;
      wherein the feeding of the first volume is controlled at, at least one flow rate value that provides a continuous increase of the water pressure from the pump in a first ramp-up phase of water pressure and,
      wherein the feeding of the second water volume is controlled to start immediately and without flow interruption after the feeding of the first water volume and is controlled to increase the water pressure until at least one pressure of extraction after a second ramp-up phase of pressure which is controlled to be steeper than the first ramp-up phase of pressure.

The machine may comprise a syringe pump by which the water flow rate is determined or calculated by the reduction of volume of a pressurized water chamber as a function of time. Alternatively, the machine comprises a pump and a flow meter for measuring the flow rate fed by the pump to the capsule. Still alternatively, the machine may comprise a rotary volumetric pump by which therotational speed of the motor is measured and the water flow rate is computed according to the result of this measurement.

The machine may also comprise a pressure sensor or a sensor for measuring at least one electrical parameter representative of a consumption of power by the pump. The electrical parameter provides input to the control unit that is indicative of the pressure of water. The control unit may be connected to the pump to control the power supplied to the pump to maintain the water output flow at the set point of pressure or to vary the pressure according to a pressure profile comprising more than one pressure set point.

### Brief Description of the Drawings:

Fig. 1 shows an exemplary schematic representation of a beverage preparation machine adapted for the implementation of the method according to the invention;
Fig. 2 is an exemplary graph representing the measured evolution of the water volume fed by the pump to the capsule (right Y-axis) and the measured water pressure (left Y-axis) as a function of time (X-axis) for the preparation and delivery of a water volume of 60 ml for preparing a coffee liquid extract;
Fig. 3 is an exemplary computerized control chart of the preparation of the coffee liquid of Fig. 2 showing respectively (from top to bottom), the time scale, the water temperature, target water volume, the hybrid flow and pressure regulation, the flow rate threshold during flow regulation and the pressure set point during pressure regulation;
Fig. 4 shows a more detailed internal cross-sectional view of a beverage preparation machine with a syringe-type pump for the implementation of the method of the invention;
Fig. 5 is a perspective cross-sectional view of the water pump of the machine of Fig. 4;
Fig. 6 is a perspective view of the actuator and transmission of the water pump of the machine of Fig. 4;
Fig. 7 is a cross-sectional view of the water pump of Fig. 4, the electrical connection of the pump to an electric power source associated with a current sensor for measuring at least one electrical parameter representative of a consumption of power from the source by the actuator being schematically illustrated.

### Detailed Description of the Invention:

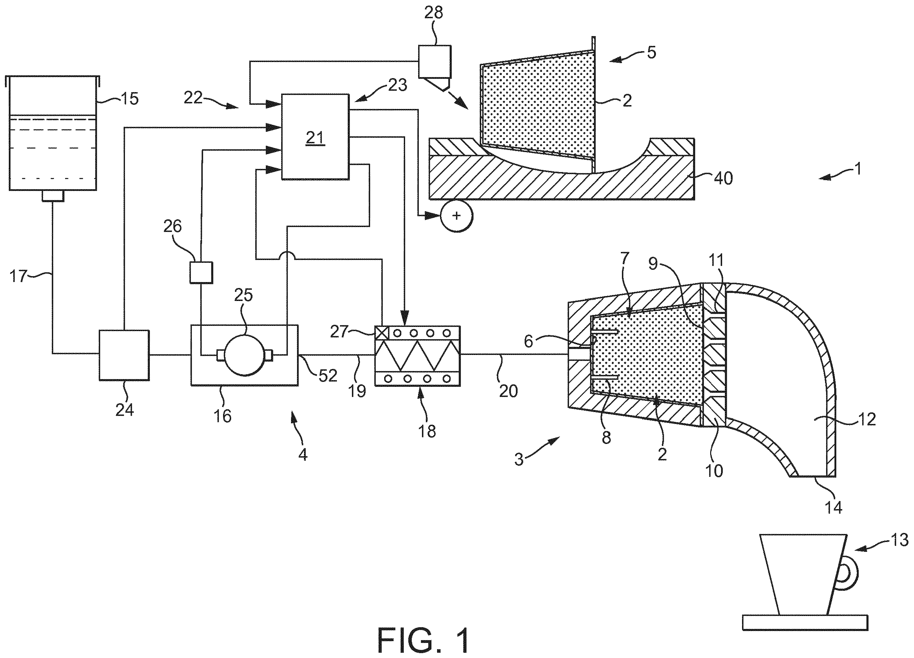

The present invention relates to a method of preparation using a preparation beverage machine 1 represented in a non-limitative manner in Fig. 1. The machine 1 is usually adapted to receive a beverage capsule 2 and prepare a beverage therefrom. The capsule is usually received in a beverage extraction unit 3 adapted to enclose the capsule and feed it with water from a controlled fluid circuit 4. The machine may optionally comprise a capsule identification unit 5 in which each capsule 2 may be individually identified for enabling an adaptation of the preparation, in particular the parameters of preparation, to the identified capsule. For example, the conditions of the prewetting can be changed as function of the type of capsule identified by the identification unit 5.

The capsule 2 usually comprises a first wall 6 through which water from the fluid circuit is fed to the beverage ingredients 7 in the capsule. The first wall may be, for instance perforated by perforation members 8 of the machine for enabling the introduction of water. The capsule further comprises a second wall 9 through which the beverage is extracted from the capsule. The second wall is preferably initially closed and opened by the conjugated effect of the rise in pressure in the capsule and the mechanical interaction with capsule support 10 of the machine. As known, the capsule support may comprise one or a plurality of protrusions that engages mechanically the second wall deforming under pressure until it breaks or perforates. The beverage may drain through channels or holes 11 to be collected in a collecting chamber 12 and dispensed through an outlet 14 to a receptacle 13 placed underneath. It is also within the scope of the invention to have a capsule with a second wall that opens only be the effect of the pressure rising in the capsule and without any contribution of mechanical interaction or that opens by the conjugated effect of the rise in pressure in the capsule and mechanical interaction member(s) provided in the capsule itself.

The fluid circuit of the beverage preparation machine comprises a source of water that can be a water tank 15. The water tank is usually refillable and may, for this, be removably connected at one end of the fluid circuit. The fluid circuit 4 further comprises a water pump 16 fluidly connected to the water tank, such as via a first water line 17 supplied with water. It also comprises a water heater 18 fluidly connected to the water pump such as via a second water line 19. The brewing unit 3 may be connected to the water heater such as via a third water line 20. Additional water lines, not illustrated here, are possible such one to bypass the water heater or connected to additional components such as a water cooler or a purge or pressure relief valve or recirculating water lines.

The beverage preparation machine comprises a control unit 21 that is generally adapted for receiving data input 22 from the different electronic components of the machine and for controlling such components such as by providing data output 23 to the various electronic components of the machine. The control unit 21 may be divided in electronically connected sub-units that may be physically separated in the machine. The control unit generally comprises processing means such as a microcontroller, at least one volatile and/or non-volatile memory for encoding instructions for the operation of the method such as in the form of one or more operating programs and values such as set points such as temperature(s), flow rate(s), pressure(s), current-related data, time and so on.

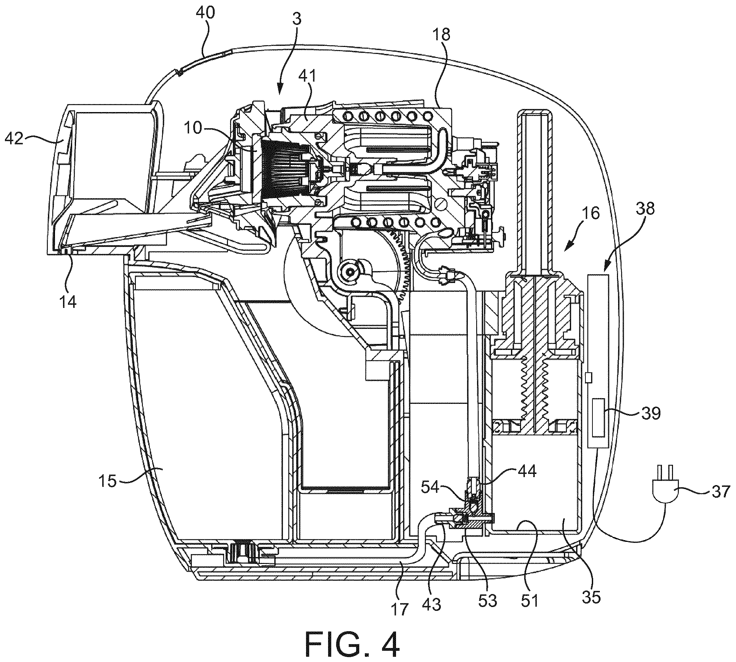

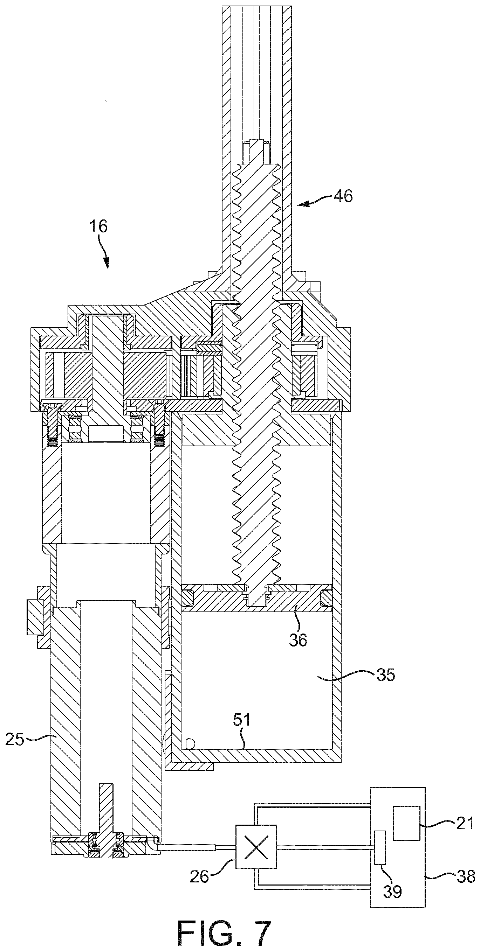

The machine may comprise flow rate determination means to measure the flow rate of water coming in the capsule. The flow determination means may comprise a flow meter 24 fluidly arranged in the fluid circuit for measuring the flow of water fed from the pump 16 to the capsule in the brewing unit and for providing flow rate related input to the control unit. The flow meter 24 as illustrated in Fig. 1 may be positioned in the water line 17 between the water tank 15 and the pump 16 or in another position along the water circuit if more appropriate. The flow rate determination means may also be embodied in the pump itself. For example, the pump may be a syringe pump by which the water flow rate is determined by the reduction of volume of a pressurized chamber as function of time. A more detailed description of a machine comprising a syringe pump follows in relation to Figs 4 and 7 and is also described in detail in co-pending European patent application No. 16177217.3. The pump may comprise a rotational part which rotational speed is proportionate to the water flow rate which is computed by the control unit.

The water pump 16 may be any suitable pump but preferably a pump adapted for being controlled by the control unit as to the power supplied to the actuator 25 of the pump such as by pulse-width modulation to vary the flow rate and/or pressure. Therefore, the pump is preferably a membrane pump, a gear pump or syringe pump. The actuator 25 can be a rotational electrical motor acting on the activation of the membrane, gear means or piston of the syringe pump. It comprises input means that receives input signals from the control unit for the control of its rotational speed. The actuator is further preferably connected to a current sensor 26 which is connected to the control unit to input signal representative of the current consumed by the actuator. The current sensor can be at least one of an ammeter, a voltmeter and potentiometer, for measuring at least one electrical parameter representative of a consumption of power by the actuator from a current source supplying the actuator (not represented).

The control unit 21 connected to the current sensor 26 is arranged by its control logic to determine the pressure of water at the outlet 52 of the pump. The electrical parameter(s) measured, such as the absorbed current, may be at least one parameter provided for the determination of the pressure. In return, the control unit is configured to control the electrical power supplied to the actuator 25 by the electrical power source (not represented). It should be noted that the current sensor 26 can be integrated into the control unit itself or into the actuator of the pump. The control unit can also be part of a powering unit including a power source.

In a variant, the current sensor 26 may be replaced by a pressure sensor (e.g. pressure transducer) or equivalent pressure determination means.

The water heater 18 is also connected to the control unit 21 by providing water temperature related input such as through one or more temperature sensor 27 (such as NTC). The control unit is connected to the heater for controlling the activation of the heating element and for regulating the temperature accordingly.

Optionally, a capsule identification member 28 is arranged in the machine for identifying the capsule and/or retrieving data from a data carrier on the capsule before preparation of the beverage in the brewing unit. The capsule identification member provides an input signal to the control unit as to the type of capsule and/or preparation parameters (e.g., set points, times, volumes, etc.) related to such capsule. The characteristic of the capsule that can be measured by the capsule identification member can be a mechanical, electrical, electromagnetic and/or optical nature. At least one of a capsule's colour, graphic pattern, shape, electric conductivity, capacitive conductivity, inductive conductivity, magnetic conductivity may be measured.

The identification of the capsule enables to determine the type of capsule and adapt the preparation parameters accordingly including the conditions of control of the first volume for prewetting and second water volume for extraction of the beverage. Different types of capsules may correspond to different capsule characteristics, such as different coffee blends, coffee weights, capsule sizes and combinations thereof. Different coffee blends may encompass different coffee grinding characteristics (e.g., particle size distribution, mean diameters), coffee origins, densities, roasting degree and combinations thereof.

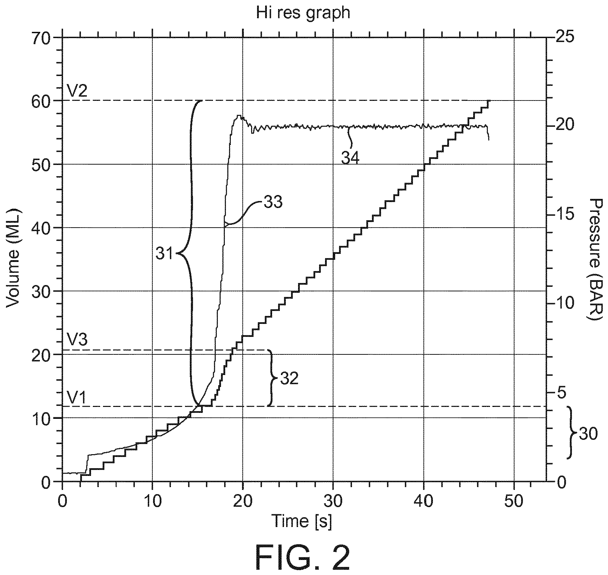

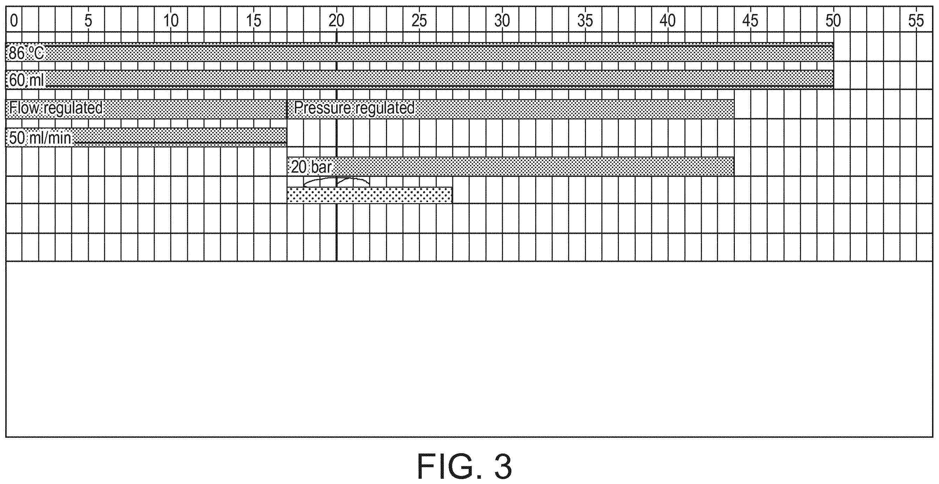

The method of the invention will now be described in relation with Figs. 2 and 3. After the capsule has been enclosed in the brewing unit 3 and a preparation starting signal is validly inputted into the control unit (e.g., identified capsules and/or button pressed on a user interface of the machine), a first volume of water V1 is fed under the control of the control unit from the pump to the capsule for prewetting the beverage ingredients (Fig. 2). This first volume of water V1 is preferably regulated by flow rate using flow rate determination means. The flow is controlled to be slow but continuous. The slow flow rate, preferably between 50 and 100 ml/minute is maintained for a few seconds, preferably between 5 and 20 seconds. During this period, no beverage is extracted from the second wall 9 of the capsule. The second wall of the capsule remains preferably non-opened until the end of the first volume feeding since the pressure at the wall does not attain the opening pressure, e.g. breaking pressure. For this, the flow rate and flow time are predetermined as function of the opening pressure of preferably each type of capsule considering its backpressure characteristics. As illustrated in Fig. 2, the pressure increases gradually in a first pressure ramp-up phase 30, as the capsule is filled with water. The flow rate of the water pump is regulated by the control unit via the flow determination means so that the measured flow rate is compared to at least one flow rate set point (possibly several different values for a possible flow rate profile during this phase) and the flow of the pump is adjusted such as by pulse width modulation to match the flow rate set point. In the illustrated example, the memorized flow set point in the unit is at 50 ml/minute.

Immediately following the prewetting with the first volume of water, a second volume of water V2-V1 is fed from the pump to the capsule without interruption between the first and second volume of water (Fig. 2). In particular, the pressure is significantly increased such as by the control unit increasing the current at the pump. During the feeding of the second volume of water, the control unit regulates the pump by the pressure, and preferably no longer by the flow rate. For this, the control logic of the control unit is arranged to immediately switch from a flow rate regulation to a pressure regulation, e.g. after the time elapsed for the first volume, by determining the water pressure at the outlet of the pump. At least one pressure set point becomes the reference for adjusting the current supplied to the pump. The pressure set point is selected to be a value above the opening characteristic of the second wall of the capsule. For example, the pressure set point is set at 20 bar whereas the opening pressure of the second wall is at 8 bar. Turning to such maximum pressure set point forces the pump to supply water to the capsule at a higher flow rate at least temporarily and to adapt the flow rate as function of the encountered backpressure. The extraction phases can be programmed to decrease or increase the flow rate progressively or stepwise. The number of extraction phases is not limited and such phases can be controlled by pressure or flow rate. In a possible example, the regulation of the pump can be programmed to provide, after opening of the capsule, a drip-by-drip beverage dispensing similar to a coffee filter drip-type machine.

At the beginning of the feeding of the second water volume, the beverage ingredients such as ground coffee may compact against the second wall and the backpressure may increase significantly. As a result, the flow rate may also be increased, at least temporarily to counter the backpressure. This may result in a steeper curve portion of the flow rate (illustrated by the portion of cumulated water volume 32 of water volume V3-V1). As a result, the pressure ramp-up phase 31 for the second volume of water becomes steeper than the pressure ramp-up phase 30 in the first volume.

The term "steeper" to qualify the second ramp-up phase 31 compared to the first ramp-up phase 30 means that the portion of pressure curve in the phase is more vertical in the pressure axis (Y- axis) direction. More particularly, according to the prewetting of the invention carried out at a slow flow rate, the first and second ramp-up phases of pressure may form a curve that is exponential or close to an exponential growth. Any tangent (first derivative of the exponential curve in that point) measured in the second ramp-up phase 31 has therefore a higher slope (and thereby "steeper") than any tangent measured in the first ramp-up phase.

The opening of the second wall of the capsule generally happens at an intermediate pressure point 33 that may be variable from capsule to capsule as it depends on the opening characteristics of the second wall (e.g., wall thickness, material). After opening of the capsule, the pressure generally continues to increase up to the pressure of extraction 34 as controlled by the unit. After reaching the maximum extraction pressure, the pressure may stabilize at the maximum extraction pressure 34 until the end of the extraction or even decrease.

In a variant, more than one pressure set point can be provided to the preparation cycle of the beverage to form a pressure profile (rather than a single pressure set point). The extraction of the beverage can so be controlled at more than one extraction pressure, e.g., two or three different set points as function of time. The pressure curve may also be influenced by the backpressure created in the capsule and at the interface with the support of capsule, such as by the compaction of ingredients and/or the flow opening area created in second wall during extraction.

The end of the feeding of the second water volume may be determined by a water cumulated volume as determined by the flow rate determination means and controlled by the control unit. The pump is stopped accordingly when the cumulated water volume is reached (e.g. at 60 ml in Figs 2 and 3).

Preferably, part or all preparation parameters, in particular, water cumulated volume(s), flow rate set point(s), pressure set point(s), first water volume feeding time(s), water or heater temperature(s) can form preparation parameters that may be stored in a memory of the control unit. These parameters may be contained partly or totally in at least one look-up table of a memory or may be transferred partly or totally from a data carrier on the capsule or an external machine to a memory of the control unit.

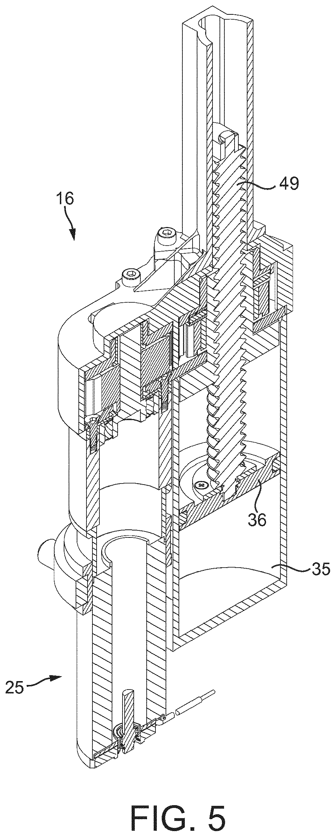

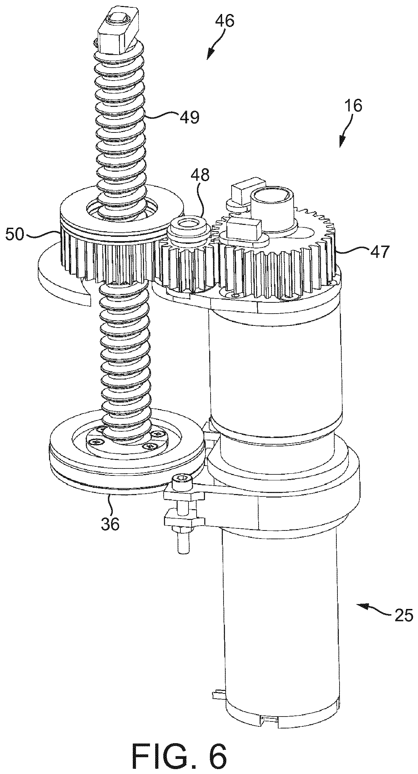

Figures 4 to 7 illustrate an exemplary embodiment of the beverage preparation machine 1 with a water tank 15 and a dispensing outlet 14 connected via a water pump 16. The water tank 15 may connect to a connection line 17 for connecting the water tank 15 to the pump 16. The water pump 16 can be configured to drive water from the water tank to the outlet through a capsule (not represented) arranged in the beverage extraction unit 3.

The pump 16 is a syringe-type pump that includes a chamber 35 and a displaceable wall 36 delimiting the chamber. The pump further comprises an electric actuator 25 driving the displaceable wall 36 between a first position and a second position for causing an inflow of liquid from the water source into the chamber 35 and for causing an outflow of water from chamber 35 to the beverage extraction chamber. For instance, such water is passed by the pump through a heater 18.

The pump 16 includes a powering unit 38 that has an electric power source 39 and that is configured for supplying power to actuator 25. The powering unit 38 can be connected by an electric plug or connector 37 to the mains or a different power supply, e.g. a battery or transformer (DC) and/or renewable energy supply (solar photovoltaic supply).

The powering unit 38 has a sensor 26 for measuring at least one electrical parameter representative of a consumption by the actuator 25 of power from the power source. The powering unit 38 includes a control unit 21 connected to the sensor 26 and to the power source. The control unit 21 is configured to control the power supplied to the electrical actuator 25 by the power source 39 as a function of: the at least one measured parameter; and a desired water input into chamber 35 and/or a desired liquid output from chamber 35, such as a desired flow and/or pressure of the liquid input and/or of the liquid output.

The control unit 21 may control the water heater 18. The control unit 21 can control the opening and closing of the brewing unit 3 comprising a capsule support 10 and a capsule cage 41. The control unit may also control the opening and closing of a moveable seat 40 on which the capsule can sit before insertion in the machine (also shown in Fig. 1).

The control unit 21 can be connected by wired or wireless communication to a user-interface 42 or to a communication module for communicating with an external machine, e.g. a network and/or a portable machine (e.g. a smartphone).

Back to the syringe pump, the water chamber 35 can have a pump inlet 43 in fluidic connection with the water tank and a pump outlet 44 in fluidic connection with the water heater and brewing chamber. Such pump inlet 43 may have an anti-return valve 53 for preventing an outflow of liquid from the chamber 35 via inlet. The pump outlet 44 may have an anti-return valve 54 for preventing an inflow of liquid into chamber 35 via outlet. Typically, the water chamber 35 forms a single cavity of variable volume with which such inlet and outlet fluidly communicate.

The actuator 25, typically an electrical motor, is connected to the displaceable wall 36 by a transmission 46. The transmission 46 associated with the motor may include a gear arrangement, such as a spur-gear arrangement, e.g. an arrangement comprising one or more of a (toothed) wheel 47, (toothed) pinion 48, snail or archimedian screw 49, such as a toothed wheel 47 connected via a toothed pinion 48 to a further toothed wheel 50 intermeshing with an archimedian screw 49 secured to displaceable wall 36.

The control unit 21 can be configured to control the electric power source to supply a desired voltage to electric actuator 25, such as a constant or variable voltage, e.g. an alternating voltage at a fixed or adjustable frequency and/or at a fixed or adjustable amplitude. The sensor 26 may be configured to measure as at least one parameter a current intake by actuator at the desired voltage.

The control unit 21 can be configured to control electric power source to supply a desired current to the electric actuator 37, such as a constant or variable current e.g. an alternating current at a fixed or adjustable frequency and/or at a fixed or adjustable amplitude. The sensor 26 may be configured to measure as at least one parameter a voltage intake by actuator 25 at the desired current.

The control unit 21 can be configured to:
- carry out a comparison, such as a comparison over time, of the at least one measured parameter and a predetermined set point stored in the control unit, such as a predetermined set point selected from: a factory stored set point; a predetermined set point stored by updating the control unit, e.g. a wired or wireless updating; and a predetermined set point provided ad hoc for a beverage serving, such as a predetermined set point associated with an ingredient of the beverage serving or with a user-input dedicated to the beverage serving; and
- control the power supplied to actuator 25 as a function of the comparison.

The control unit 21 may be configured to adjust a voltage intake by actuator 25 from the power supply to ensure a desired current intake by the actuator derived from measuring with the current sensor 26 the current intake as at least one parameter, e.g. to provide the liquid at a desired pressure from the chamber 35 towards the dispensing outlet.

The control unit 21 can be configured to adjust a current intake by the actuator 25 from the power supply to ensure a desired voltage intake by the actuator derived from measuring with the current sensor 26 the voltage intake as at least one parameter to provide the liquid at a desired flow rate (ml/min.) from chamber 35 towards outlet.

The control unit 21 may be configured to interrupt the powering of actuator 25 when the displaceable wall 36 delimiting the chamber reaches an end wall 51 of the chamber or a physically-determined or a sensor-determined end position, e.g. an end position determined by a magnetic or optical sensor or an end position determined by a mechanical stop (not represented).

To determine the water flow rate, the control unit 21 may receive an input related to the reduction of volume of the chamber 35 as function of time. The volume of the chamber 35 is reduced directly by the displacement of the displaceable wall 36 towards the end wall 51. The displacement can thereby be determined by measuring the rotational speed of at least one of the rotational members of the transmission, e.g. pinion 47, via a sensor. The flow rate is then computed from the measurement of the rotational speed considering the proportionality with the volume of the chamber. Alternatively, the position of the displaceable wall or archimedean screw can be determined by position sensors and the flow rate computed from the position of the wall as a function of time.

The control unit 21 can generally be configured to: carry out a comparison, such as a comparison over time, of the at least one measured parameter and a predetermined set point associated with the capsule; and control the power supplied to the actuator 37 as a function of the comparison. For instance, the control unit 21 controls the power supplied to actuator 25 so as to minimise a difference between the predetermined set point and the at least one measure parameter (e.g., the water pressure). The predetermined set point can be derivable from a characteristic of the capsule containing the ingredients or of a user-input associated with the ingredient. A characteristic of the ingredients may be derived from a flow property of the ingredients in the brewing unit. This flow property can be derived from the at least one electrical parameter representative of the consumption of power from source by the actuator measured by current sensor. Depending on the type of beverage, the ingredient (e.g. ground and/or instant coffee, tea or milk concentrate or powder) used therefore may be more or less resistant to the flow of liquid therethrough.

## Claims

1. Method for the preparation of a beverage in a beverage preparation machine (1) from a capsule (2) containing beverage ingredients by feeding water to the capsule through a first wall (6) of the capsule by a water pump (16) of the machine under the control of a control unit (21); the brewed beverage being extracted through a second wall (9) of the capsule; said second wall being preferably opened for extraction of the brewed beverage at least by the effect of pressure being built up inside the capsule as a result of the water being fed in the capsule; comprising:
- feeding a first volume of water (V1) in the capsule containing beverage ingredients in dry state for prewetting the beverage ingredients in the capsule before beverage is extracted from the second wall (9) of the capsule ("prewetting");
- feeding a second volume of water (V2-V1) in the capsule to have beverage extracted from the second wall (9) of the capsule;
wherein the feeding of the first volume is controlled at, at least one flow rate value that provides a continuous increase of the water pressure from the pump in a first ramp-up phase (30) of water pressure and,
wherein the feeding of the second water volume is controlled to start immediately and without flow interruption after the feeding of the first water volume and is controlled to increase the water pressure until at least one pressure of extraction after a second ramp-up phase of pressure (31) which is controlled to be steeper than the first ramp-up phase (30) of pressure.

2. Method according to claim 1, wherein the flow rate of the water pump (16) is regulated for the feeding of the first volume of water (V1), particularly to match at least one flow rate set point, until a predetermined flow time or predetermined water volume is reached or a predetermined pressure set point lower than the extraction pressure is reached.

3. Method according to claim 1, wherein the feeding of the first volume of water (V1) is controlled by a predetermined powering of the water pump (16) during a predetermined time.

4. Method according to claim 1 to 3, wherein the feeding of the first volume is controlled at a value comprised between 50 and 100 ml/min during a period comprised between 5 and 20 seconds.

5. Method according to any one of claims 2 to 4, wherein the pressure of the water pump (16) is regulated for the feeding of the second volume of water (V2-V1), particularly to match at least one pressure set point.

6. Method according to claim 5, wherein the second volume of water (V2-V1) is fed until the targeted volume of beverage is extracted.

7. Method according to claim 5 or 6, wherein the second volume of water is controlled to be started before the opening pressure (33) for opening the second wall (9) of the capsule is reached.

8. Method according to claims 5 to 7, wherein the pressure for feeding the second volume (V2-V1) is measured by a pressure sensor or by a sensor (26) measuring a current-related variable of the motor driving the water pump (16).

9. Method according to claims 5 to 8, wherein the pressure is regulated at a pressure set point comprised between 8 and 20 bar, preferably 10-15 bar.

10. Method according to any of the preceding claims 2, 4 to 9, wherein the flow rate is determined by flow rate determination means arranged according to any one of the following manners :
d) by determining the reduction of volume by time unit of a pressurized water chamber of a syringe pump (16) of the machine or,
e) by measuring by a flow meter the flow rate of water fed by the pump to the capsule or,
f) by measuring the rotational speed of the motor of a rotary volumetric pump and computing the flow rate accordingly.

11. Method according to claim 10, wherein in manner a), the reduction of volume by time unit of the pressurized water chamber is determined by the relative displacement of a displaceable wall delimiting the chamber, displaced by an electrical actuator.

12. Method according to any of the preceding claims, wherein the capsule type is identified by the beverage preparation machine and, at least the feeding of the first volume of water (V1) and/or the second volume of water (V2-V1) are/is controlled by the control unit as function of the type of capsule identified.

13. A beverage preparation machine for the implementation of the method
according to any of the preceding Z claims, said beverage preparation machine comprises:
a source of water (15),
a dispensing outlet (14),
a brewing unit (3) for receiving the capsule (5),
a water pump (16) for feeding water to the brewing unit,
wherein it comprises a control unit (21) arranged for controlling the pump for:
- feeding a first volume of water (V1) in the capsule containing beverage ingredients in dry state for prewetting the beverage ingredients in the capsule before beverage is extracted from the second wall (9) of the capsule ("prewetting");
- feeding a second volume of water (V2-V1) in the capsule to have beverage extracted from the second wall (9) of the capsule;
wherein the feeding of the first volume (V1) is controlled at, at least one flow rate value that provides a continuous increase of the water pressure from the pump in a first ramp-up phase (30) of water pressure and,
wherein the feeding of the second water volume is controlled to start immediately and without flow interruption after the feeding of the first water volume and is controlled to increase the water pressure until at least one pressure of extraction after a second ramp-up phase of pressure (31) which is controlled to be steeper than the first ramp-up phase (30) of pressure.

14. Beverage preparation machine according to claim 13, wherein it comprises:
- a syringe pump (16) by which the water flow rate is determined by the reduction of volume of a pressurized water chamber by time unit or,
- a pump (16) and a flow meter (24) for measuring the flow rate fed by the pump to the capsule or,
- a rotary volumetric pump by which the rotational speed of the motor of a rotary volumetric pump is measured and the flow rate computed accordingly.

15. Beverage preparation machine according to any one of claims 13 or 14, wherein it comprises a sensor (26) for measuring at least one electrical parameter representative of a consumption of power by the water pump and the control unit being connected to the pump to control the power supplied to the pump to maintain the water output flow at the set point of pressure or to vary the pressure according to a pressure profile comprising more than one pressure set point.

## Patentansprüche

1. Verfahren zur Zubereitung eines Getränks in einer Getränkezubereitungsmaschine (1) aus einer Getränkeinhaltsstoffe enthaltenden Kapsel (2) durch Zuführen von Wasser zu der Kapsel durch eine erste Wand (6) der Kapsel durch eine Wasserpumpe (16) der Maschine unter der Steuerung einer Steuereinheit (21); wobei das gebrühte Getränk durch eine zweite Wand (9) der Kapsel entnommen wird; wobei die zweite Wand vorzugsweise zur Entnahme des gebrühten Getränks mindestens durch die Wirkung eines in der Kapsel infolge des zugeführten Wassers aufgebauten Drucks in der Kapsel geöffnet wird; umfassend:
- Zuführen eines ersten Wasservolumens (V1) in der Kapsel, die Getränkeinhaltsstoffe in einem trockenen Zustand enthält, um die Getränkeinhaltsstoffe in der Kapsel vorzubenetzen, bevor das Getränk aus der zweiten Wand (9) der Kapsel entnommen wird ("Vorbenetzen");
- Zuführen eines zweiten Wasservolumens (V2-V1) in der Kapsel, um aus der zweiten Wand (9) der Kapsel Getränk entnehmen zu lassen;
wobei das Zuführen des ersten Volumens auf mindestens einen Durchflussratenwert gesteuert wird, der eine kontinuierliche Erhöhung des Wasserdrucks von der Pumpe in einer ersten Anstiegsphase (30) des Wasserdrucks bereitstellt, und,
wobei das Zuführen des zweiten Wasservolumens so gesteuert wird, dass es unverzüglich und ohne Durchflussunterbrechung nach dem Zuführen des ersten Wasservolumens beginnt und so gesteuert wird, dass der Wasserdruck bis auf mindestens einen Entnahmedruck nach einer zweiten Druckanstiegsphase (31) ansteigt, die so gesteuert wird, dass sie steiler als die erste Druckanstiegsphase (30) ist.

2. Verfahren nach Anspruch 1, wobei die Durchflussrate der Wasserpumpe (16) für das Zuführen des ersten Wasservolumens (V1), insbesondere im Hinblick auf Anpassung an mindestens einen Durchflussratensollwert, geregelt wird, bis eine vorgegebene Durchflusszeit oder ein vorgegebenes Wasservolumen erreicht ist oder ein vorgegebener Drucksollwert erreicht ist, der niedriger als der Entnahmedruck ist.

3. Verfahren nach Anspruch 1, wobei das Zuführen des ersten Wasservolumens (V1) durch eine vorgegebene Stromversorgung der Wasserpumpe (16) während einer vorgegebenen Zeit gesteuert wird.

4. Verfahren nach Anspruch 1 bis 3, wobei das Zuführen des ersten Volumens bei einem Wert, der zwischen 50 und 100 ml/min liegt, während eines Zeitraums, der zwischen 5 und 20 Sekunden liegt, gesteuert wird.

5. Verfahren nach einem der Ansprüche 2 bis 4, wobei der Druck der Wasserpumpe (16) für das Zuführen des zweiten Wasservolumens (V2-V1) geregelt wird, insbesondere um mindestens einen Drucksollwert anzupassen.

6. Verfahren nach Anspruch 5, wobei das zweite Wasservolumen (V2-V1) zugeführt wird, bis das Zielvolumen des Getränks entnommen wird.

7. Verfahren nach Anspruch 5 oder 6, wobei das zweite Wasservolumen so gesteuert wird, dass es gestartet wird, bevor der Öffnungsdruck (33) zum Öffnen der zweiten Wand (9) der Kapsel erreicht ist.

8. Verfahren nach den Ansprüchen 5 bis 7, wobei der Druck zum Zuführen des zweiten Volumens (V2-V1) durch einen Drucksensor oder durch einen Sensor (26) gemessen wird, der eine strombezogene Variable des die Wasserpumpe (16) antreibenden Motors misst.

9. Verfahren nach den Ansprüchen 5 bis 8, wobei der Druck auf einen Drucksollwert zwischen 8 und 20 bar, vorzugsweise 10 bis 15 bar, geregelt wird.

10. Verfahren nach einem der vorstehenden Ansprüche 2, 4 bis 9, wobei die Durchflussrate durch Mittel zur Durchflussbestimmung bestimmt wird, die entsprechend einer der folgenden Arten angeordnet sind:
d) durch Bestimmen der Volumenreduzierung pro Zeiteinheit einer Druckwasserkammer einer Spritzenpumpe (16) der Maschine, oder,
e) durch Messen der Durchflussrate des von der Pumpe der Kapsel zugeführten Wassers durch einen Durchflussmesser, oder,
f) durch Messen der Drehzahl des Motors einer volumetrischen Kreiselpumpe und entsprechendes Berechnen der Durchflussrate.

11. Verfahren nach Anspruch 10, wobei in Art a) die Volumenreduzierung pro Zeiteinheit der Druckwasserkammer durch die relative Verschiebung einer die Kammer begrenzenden verschiebbaren Wand bestimmt wird, die durch einen elektrischen Stellantrieb verschoben wird.

12. Verfahren nach einem der vorstehenden Ansprüche, wobei der Kapseltyp durch die Getränkezubereitungsmaschine identifiziert wird und mindestens das Zuführen des ersten Wasservolumens (V1) und/oder des zweiten Wasservolumens (V2-V1) von der Steuereinheit in Abhängigkeit von dem identifizierten Kapseltyp gesteuert wird.

13. Getränkezubereitungsmaschine zur Implementierung des Verfahrens nach einem der vorstehenden Ansprüche, wobei die Getränkezubereitungsmaschine umfasst:
eine Wasserquelle (15),
einen Abgabeauslass (14),
eine Brüheinheit (3) zum Aufnehmen der Kapsel (5);
eine Wasserpumpe (16) zum Zuführen von Wasser zu der Brüheinheit,
wobei sie eine Steuereinheit (21) umfasst, die angeordnet ist, um die Pumpe zu steuern zum:
- Zuführen eines ersten Wasservolumens (V1) in der Kapsel, die Getränkeinhaltsstoffe in einem trockenen Zustand enthält, um die Getränkeinhaltsstoffe in der Kapsel vorzubenetzen, bevor das Getränk aus der zweiten Wand (9) der Kapsel entnommen wird ("Vorbenetzen");
- Zuführen eines zweiten Wasservolumens (V2-V1) in der Kapsel, um aus der zweiten Wand (9) der Kapsel Getränk entnehmen zu lassen;
wobei das Zuführen des ersten Volumens (V1) auf mindestens einen Durchflussratenwert gesteuert wird, der eine kontinuierliche Erhöhung des Wasserdrucks von der Pumpe in einer ersten Anstiegsphase (30) des Wasserdrucks bereitstellt, und,
wobei das Zuführen des zweiten Wasservolumens so gesteuert wird, dass es unverzüglich und ohne Durchflussunterbrechung nach dem Zuführen des ersten Wasservolumens beginnt und so gesteuert wird, dass der Wasserdruck bis auf mindestens einen Entnahmedruck nach einer zweiten Druckanstiegsphase (31) ansteigt, die so gesteuert wird, dass sie steiler als die erste Druckanstiegsphase (30) ist.

14. Getränkezubereitungsmaschine nach Anspruch 13, wobei sie umfasst:
- eine Spritzenpumpe (16), durch die die Wasserdurchflussrate durch die Volumenreduzierung einer Druckwasserkammer pro Zeiteinheit bestimmt wird, oder,
- eine Pumpe (16) und einen Durchflussmesser (24) zum Messen der Durchflussrate, die der Kapsel von der Pumpe zugeführt wird, oder,
- eine volumetrische Kreiselpumpe, durch die die Drehzahl des Motors einer volumetrischen Kreiselpumpe gemessen und die Durchflussrate entsprechend berechnet wird.

15. Getränkezubereitungsmaschine nach einem der Ansprüche 13 oder 14, wobei sie einen Sensor (26) zum Messen mindestens eines elektrischen Parameters umfasst, der für einen Leistungsverbrauch von der Wasserpumpe repräsentativ ist, und wobei die Steuereinheit mit der Pumpe verbunden ist, um die der Pumpe zugeführte Leistung so zu steuern, dass die Wasserausgangsströmung an dem Drucksollwert aufrechterhalten wird oder der Druck gemäß einem Druckprofil variiert wird, das mehr als einen Drucksollwert umfasst.

## Revendications

1. Procédé pour la préparation d'une boisson dans une machine de préparation de boisson (1) à partir d'une capsule (2) contenant des ingrédients de boisson en alimentant de l'eau vers la capsule à travers une première paroi (6) de la capsule par une pompe à eau (16) de la machine sous la commande d'une unité de commande (21) ; la boisson infusée étant extraite à travers une deuxième paroi (9) de la capsule ; ladite deuxième paroi étant de préférence ouverte pour extraction de la boisson infusée au moins par l'effet de la pression étant accumulée à l'intérieur de la capsule en conséquence de l'eau étant alimentée dans la capsule ; comprenant :
- l'alimentation d'un premier volume d'eau (V1) dans la capsule contenant des ingrédients de boisson dans un état sec pour prémouiller les ingrédients de boisson dans la capsule avant que la boisson soit extraite à partir de la deuxième paroi (9) de la capsule (« prémouilage ») ;
- l'alimentation d'un deuxième volume d'eau (V2-V1) dans la capsule pour avoir une boisson extraite à partir de la deuxième paroi (9) de la capsule ;
dans lequel l'alimentation du premier volume est commandée à, au moins une valeur de débit qui fournit une augmentation continue de la pression d'eau à partir de la pompe dans une première phase de montée (30) de la pression d'eau et,
dans lequel l'alimentation du deuxième volume d'eau est commandée pour démarrer immédiatement et sans interruption d'écoulement après l'alimentation du premier volume d'eau et est commandée pour augmenter la pression d'eau jusqu'à au moins une pression d'extraction après une deuxième phase de montée en pression (31) qui est commandée pour être plus abrupte que la première phase de montée (30) en pression.

2. Procédé selon la revendication 1, dans lequel le débit de la pompe à eau (16) est régulé pour l'alimentation du premier volume d'eau (V1), en particulier pour correspondre à au moins un point de consigne de débit, jusqu'à ce qu'un temps d'écoulement prédéterminé ou un volume d'eau prédéterminé soit atteint ou qu'un point de consigne de pression prédéterminé inférieur à la pression d'extraction soit atteint.

3. Procédé selon la revendication 1, dans lequel l'alimentation du premier volume d'eau (V1) est commandée par une alimentation en puissance prédéterminée de la pompe à eau (16) pendant un temps prédéterminé.

4. Procédé selon la revendication 1 à 3, dans lequel l'alimentation du premier volume est commandée à une valeur comprise entre 50 et 100 ml/min pendant une période comprise entre 5 et 20 secondes.

5. Procédé selon l'une quelconque des revendications 2 à 4, dans lequel la pression de la pompe à eau (16) est régulée pour l'alimentation du deuxième volume d'eau (V2-V1), en particulier pour correspondre à au moins un point de consigne de pression.

6. Procédé selon la revendication 5, dans lequel le deuxième volume d'eau (V2-V1) est alimenté jusqu'à ce que le volume visé de boisson soit extrait.

7. Procédé selon la revendication 5 ou 6, dans lequel le deuxième volume d'eau est commandé pour être démarré avant que la pression d'ouverture (33) pour ouvrir la deuxième paroi (9) de la capsule ne soit atteinte.

8. Procédé selon les revendications 5 à 7, dans lequel la pression pour l'alimentation du deuxième volume (V2-V1) est mesurée par un capteur de pression ou par un capteur (26) mesurant une variable relative au courant du moteur entraînant la pompe à eau (16).

9. Procédé selon les revendications 5 à 8, dans lequel la pression est régulée à un point de consigne de pression compris entre 8 et 20 bar, de préférence 10 à 15 bar.

10. Procédé selon l'une quelconque des revendications 2, 4 à 9, précédentes dans lequel le débit est déterminé par un moyen de détermination de débit agencé selon l'une quelconque des manières suivantes :
d) en déterminant la réduction de volume par unité de temps d'une chambre à eau sous pression d'une pompe à seringue (16) de la machine ou,
e) en mesurant par un débitmètre le débit d'eau alimenté par la pompe vers la capsule ou,
f) en mesurant la vitesse de rotation du moteur d'une pompe volumétrique rotative et en calculant le débit en conséquence.

11. Procédé selon la revendication 10, dans lequel dans la manière a), la réduction de volume par unité de temps de la chambre à eau sous pression est déterminée par le déplacement relatif d'une paroi déplaçable délimitant la chambre, déplacée par un actionneur électrique.

12. Procédé selon l'une quelconque des revendications précédentes, dans lequel le type de capsule est identifié par la machine de préparation de boisson et, au moins l'alimentation du premier volume d'eau (V1) et/ou celle du deuxième volume d'eau (V2-V1) sont/est commandée(s) par l'unité de commande en fonction du type de capsule identifié.

13. Machine de préparation de boisson pour l'implémentation du procédé selon l'une quelconque des revendications précédentes, ladite machine de préparation de boisson comprend :
une source d'eau (15),
une sortie de distribution (14),
une unité d'infusion (3) pour recevoir la capsule (5),
une pompe à eau (16) pour alimenter de l'eau à l'unité d'infusion,
dans laquelle elle comprend une unité de commande (21) agencée pour commander la pompe pour :
- l'alimentation d'un premier volume d'eau (V1) dans la capsule contenant des ingrédients de boisson dans un état sec pour prémouiller les ingrédients de boisson dans la capsule avant que la boisson soit extraite à partir de la deuxième paroi (9) de la capsule (« prémouilage ») ;
- l'alimentation d'un deuxième volume d'eau (V2-V1) dans la capsule pour avoir une boisson extraite à partir de la deuxième paroi (9) de la capsule ;
dans laquelle l'alimentation du premier volume (V1) est commandée à, au moins une valeur de débit qui fournit une augmentation continue de la pression d'eau à partir de la pompe dans une première phase de montée (30) de la pression d'eau et,
dans laquelle l'alimentation du deuxième volume d'eau est commandée pour démarrer immédiatement et sans interruption d'écoulement après l'alimentation du premier volume d'eau et est commandée pour augmenter la pression d'eau jusqu'à au moins une pression d'extraction après une deuxième phase de montée en pression (31) qui est commandée pour être plus abrupte que la première phase de montée (30) en pression.

14. Machine de préparation de boisson selon la revendication 13, dans laquelle elle comprend :
- une pompe à seringue (16) par laquelle le débit d'eau est déterminé par la réduction de volume d'une chambre à eau sous pression par unité de temps ou,
- une pompe (16) et un débitmètre (24) pour mesurer le débit alimenté par la pompe vers la capsule ou,
- une pompe volumétrique rotative par laquelle la vitesse de rotation du moteur d'une pompe volumétrique rotative est mesurée et le débit calculé en conséquence.

15. Machine de préparation de boisson selon l'une quelconque des revendications 13 ou 14, dans laquelle elle comprend un capteur (26) pour mesurer au moins un paramètre électrique représentatif d'une consommation de puissance par la pompe à eau et l'unité de commande étant connectée à la pompe pour commander la puissance fournie à la pompe pour maintenir l'écoulement de sortie d'eau au point de consigne de pression ou pour faire varier la pression selon un profil de pression comprenant plus d'un point de consigne de pression.
